# EUROPÄISCHE PATENTANMELDUNG

(11) **EP 2 277 733 A2**
(43) Veröffentlichungstag der Anmeldung: **26.01.2011**
(21) Anmeldenummer: 10004030.2
(22) Anmeldetag: 16.04.2010
(51) Int. Cl.: B60K 20/04

(54) **Lagerung für einen Schalthebel, insbesondere eines Nutzfahrzeugs**

(30) Priorität: 20.07.2009 AT 11332009
(71) Anmelder: MAN Nutzfahrzeuge Österreich AG, 4400 Steyr (AT)
(72) Erfinder: Kletzmair, Walter, 4540 Bad Hall (AT)

(57) **Zusammenfassung**

Lagerung für einen Schalthebel (1), insbesondere eines Nutzfahrzeugs, an dessen unterem Ende (2) ein Koppelglied angelenkt ist, das mit dem Schalteingang eines Gangwechselgetriebes verbunden ist. Der Schalthebel (1) weist ein Lagerauge (4) auf, in das ein Kugelgelenk (5) mit seinem Lagergehäuse (6) eingebaut ist, das aus einem beiderseits durch Kappen (7; 8) abgedeckten Lagerring (9) mit eingebauter Kugelkalotte (10) besteht. Ein motorseitig befestigter Lagerzapfen (11) ist mit seinem Kugelkopf (12) in der Kugelkalotte (10) aufgenommen. Das Kugelgelenk (5) ist im Lagerauge (4) durch zwei, die Kappen (7; 8) zwischen sich aufnehmenden Sicherungsringen (13) in Einbaulage (14) gehalten ist. Jede der beiden Kappen (7; 8) ist beidseitig mit einem der Entklirrung dienenden nichtmetallischen elastischen nachgiebigen Werkstoff (15) überzogen.

## Beschreibung

Die Erfindung betrifft eine Lagerung für einen Schalthebel, insbesondere eines Nutzfahrzeugs, an dessen unterem Ende ein Koppelglied angelenkt ist, das mit einem Schalteingang des Gangswechselgetriebes verbunden ist, wobei der Schalthebel ein Lagerauge aufweist, in das ein Kugelgelenk mit seinem Lagergehäuse eingebaut ist, das aus einem beiderseits durch Kappen abgedeckten Lagerring mit eingebauter Kugelkalotte besteht, wobei ein motorseitig befestigter Lagerzapfen mit seinem Kugelkopf in der Kugelkalotte aufgenommen ist und das Kugelgelenk im Lagerauge durch zwei, die Kappen zwischen sich aufnehmenden Sicherungsringen in Einbaulage gehalten ist.

Aus der EP 1 707 424 A2 ist eine Schaltungseinheit eines Nutzfahrzeugs mit kippbarem Fahrerhaus zur Auswahl eines Fahrgangs bei einem Mehrstufengetriebe bekannt. Die Schaltungseinheit weist zumindest ein Schalterelement auf, das in einem nicht gekippten Zustand des Fahrerhauses wenigstens abschnittsweise einen Bodenbereich des Fahrerhauses sowie einen von einem balgartigen Dämmelement zumindest teilweise umschlossenen, zwischen dem Bodenbereich des Fahrerhauses und einem unterhalb des Bodenbereichs am Motor befestigten Abstützteller befindlichen Hohlraum durchragt. An einem Abstützteller ist eine untere Gleitplatte vorgesehen und am balgartigen Dämmelement ist eine obere Leitplatte angeordnet, die beide derartig befestigt sind, dass die untere und die obere Gleitplatte zumindest abschnittsweise eine Kontaktfläche bilden und gegeneinander beweglich gelagert sind.

Am oberen Ende des Schaltelements ist in der Regel ein Schaltknauf angeordnet, den der Fahrer mit seiner Hand umschließt, um durch eine Bewegung in Fahrtrichtung und/oder quer zu dieser einen Gangwechsel seines Gangwechselgetriebes einzuleiten. Nachteilig ist dabei, dass der Schaltknauf zumindest mittelbar über das Schaltelement mit dem Motor in Verbindung steht. In Abhängigkeit der Drehzahl des Motors können für den Fahrer deutlich spürbar Vibrationen vom Motor bzw. vom Antriebsstrang in den Schaltknauf übertragen werden. Auch wenn die Berührungsflächen des Schaltknaufes eine entklirrende Kunststoffschicht aufweisen, führen die übertragenen Vibrationen des Motors für den Fahrer zu einer deutlich merkbaren Belastung.

Ausgehend von dem bekannten Stand der Technik liegt der Erfindung die Aufgabe zugrunde, den Schalthebel eines Nutzfahrzeugs gegenüber einer motorseitigen Vibrationseintragungen von Seiten des Fahrzeugs zu entkoppeln.

Die vorgenannte Aufgabe wird durch eine Lagerung für einen Schalthebel mit den im Kennzeichen des Anspruchs 1 genannten Merkmalen gelöst.

Die erfindungsgemäße Lagerung ist in einem Lagerauge eines metallenen Schalthebels angeordnet, der den Fahrerhausboden durchbricht und innerhalb des Fahrerhauses einen Schaltknauf trägt, mit dem der Fahrer den Gangwechsel seines Gangwechselgetriebes initiiert. Das Gangwechselgetriebe kann dabei ein manuelles, halbautomatisches oder automatisches Gangwechselgetriebe sein. Ein Lagerauge ist unterhalb des Fahrerhausbodens im Schalthebel angeordnet und weist ein Lagergehäuse mit einem darin aufgenommenen Kugelgelenk auf. Das Lagergehäuse dient dabei zum Schutz des Lagers vor Verschmutzung. Unter einem Kugelgelenk ist in diesem Zusammenhang ein Gelenk zu verstehen, bei dem der Gelenkkopf eine kugelähnliche Form besitzt. An seinem unteren Ende ist am Schalthebel ein Koppelglied angelenkt, das der Übertragung des Schaltbefehls auf den Schalteingang des Gangwechselgetriebes dient. Der Schaltbefehl kann dabei durch ein weiteres Schaltgestänge, einen Bowdenzug, elektronisch oder auf jede andere Art an das Gangwechselgetriebe weitergeleitet werden. Vorstellbar ist, dass der Schalthebel ein Gusseisenteil ist oder aber aus einem geschmiedeten Werkstück besteht. Das Lagerauge durchsetzt den Schalthebel quer zur Fahrtrichtung und dient der Aufnahme des Lagergehäuses des Kugelgelenks. Der Innendurchmesser des Lagerauges ist dabei dem Außenumfang sowie der Form des Lagergehäuses des Kugelgelenks angepasst. Hierbei ist denkbar, dass das Kugelgelenk ein an sich bekanntes Elges-Lager ist, denkbar ist jedoch auch jedes andere für den vorliegenden Einsatzzweck geeignete Gelenklager zu verwenden. Das Kugelgelenklager ist als Gleitlager ausgebildet und umfasst ein Kugellager. Im Weiteren wird von der Verwendung eines Kugelgelenklagers ausgegangen. Das Kugelgelenk ist mit dem umgebenden Lagergehäuse in das Lagerauge eingebaut. Das Lagergehäuse besteht aus einem, zwei Lagerschalen umfassenden Lagerring. Zur Abdichtung der Lagerschalen gegenüber dem umlaufenden Lagerring sind ringförmige Dichtungselemente vorgesehen. Ein motorseitig befestigter Lagerzapfen trägt an seinem freien Ende einen zu einer Kugelkalotte abgeflachten Kugelkopf. Die Kugelkalotte ist in Längsrichtung des Lagerzapfens gesehen beiderseits nach außen durch je eine Kappe abgedeckt, die durch je einen Sicherungsring in Einbaulage im Lagerauge gehalten werden. Die Sicherungsringe rasten dabei in Einbaulage in Nuten im Innenumfang des Lagerauges ein. Links und rechts des Kugelkopfes ist je eine Kappe angeordnet, die mit dem Kugelkopf und/oder dem Lagerzapfen in Verbindung stehen. Die Kappen bestehen aus einem metallischen Material und sind zur Entklirrung des Lagerzapfens und des Kugelkopfes gegenüber dem Lagerauge mit einer Schicht aus nichtmetallischem, elastischen und nachgiebigen Werkstoff überzogen. Der Werkstoff ist ein Kunststoff (z. B. PVC) oder auch ein Gummi. Denkbar ist auch der Einsatz eines anderen Kunststoffes, der sich mit der Metallkappe verbinden lässt und nicht reißfähig ist, um eine Entklirrung zwischen dem Lagerzapfen mit seinem Kugelkalotte und dem Lagerauge sicherzustellen. Im Weiteren wird von einer gänzflächigen Gummibeschichtung der Außenflächen der beiden Kappen ausgegangen. Im verbauten Zustand drückt die Kugelkalotte mit ihrem abgeflachten freien Ende gegen die beschichtete äußere Kappe und presst diese gegen den Sicherungsring. Möglich ist auch, dass die Kappe gegen das Lagerauge gepresst wird. Der Lagerzapfen mit dem daran befindlichen Kugelkopf oder der Kugelkalotte tritt im verbauten Zustand durch den Durchbruch der zapfenseitigen Kappe hindurch. Je nachdem, welche Stellung der Schalthebel gegenüber dem motorseitig befestigten Lagerzapfen einnimmt, kommt der Lagerzapfen und/oder der Kugelkopf mit der zapfenseitigen und/oder der gegenüberliegenden Kappe in Berührung. Die erfindungsmäßige Gummibeschichtung der Außenseiten der beiden metallenen Kappen verhindert eine direkte Berührung des Lagerzapfens und des Kugelkopfes mit den jeweiligen Kappen. Der Übertragungsweg motorseitiger Vibrationen zwischen dem Lagerzapfen mit Kugelkopf und dem Schalthebel ist somit wirksam unterbunden. Beide Kappen sind in Bezug zur Längsachse des Lagerzapfens nach außen durch Sicherungsringe in Einbaulage verliersicher im Lagerauge gehalten.

Nach einer anderen Ausführungsform der Erfindung weist die zapfenseitig an der Kugelkalotte anliegende Kappe einen Ringvorsprung auf, auf dem das eine axiale Ende eines aus elastischem Werkstoff bestehenden Faltenbalgs angeschlossen ist, der den Zapfen mit einem Teil seiner Länge umschließt. Denkbar ist, dass der Faltenbalg an seinem freien Ende eine umlaufende Lippe bildet, die in eine am Lagerzapfen angebrachte umlaufende Nut eingreift. Dem Eintrag von Schmutzpartikeln oder Flüssigkeit in das Kugelgelenk und/oder das Lagerauge kann somit wirksam entgegengewirkt werden.

Im Folgenden wird die Erfindung anhand der Zeichnung näher erläutert, in der vorteilhafte Ausführungsbeispiele dargestellt sind. Hierbei zeigen:
- Fig. 1: die erfindungsgemäße Lagerung für einen Schalthebel,
- Fig. 2: das erfindungsgemäße Kugelgelenk im Lagerauge,
- Fig. 3: den Faltenbalg,
- Fig. 4: in perspektivischer Darstellung den Lagerzapfen mit Kugelkopf und zugehörigem Lagergehäuse und
- Fig. 5: in perspektivischer Darstellung den Faltenbalg.

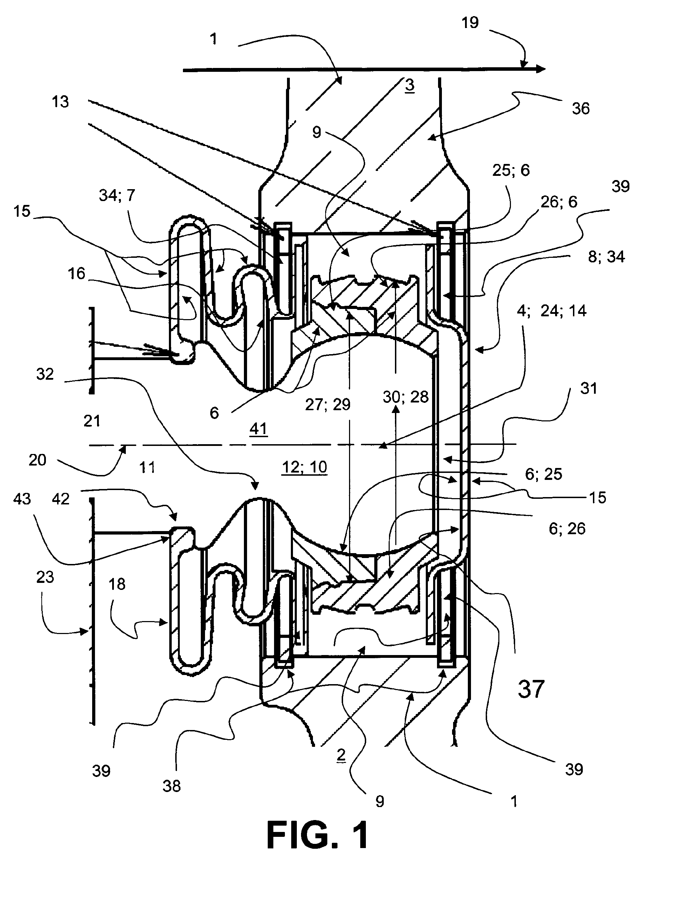

Fig. 1 zeigt seitlich geschnitten einen Schalthebel 1 eines Nutzfahrzeugs, an dessen unterem Ende 2 ein Koppelglied (nicht dargestellt) angelenkt ist. Das obere Ende 3 des Schalthebels 1 durchbricht den Fahrerhausboden 19 des Nutzfahrzeugs und trägt einen nicht dargestellten Schaltknauf. In Längsrichtung 20 gesehen weist der Lagerzapfen 11 an seinem freien Ende 21 einen Kugelkopf in Form einer Kugelkalotte auf. An seinem gegenüberliegenden festen Ende ist der Lagerzapfen 11 am Motor 23 befestigt. Mit Ziffer 4 ist das Lagerauge des Schalthebels 1 dargestellt. Im Inneren 24 des Lagerauges 4 ist das Lagergehäuse 6 gezeigt.

Das Lagergehäuse umfasst zwei Halbschalen 25; 26. In der Fig. 1 weisen die Halbschalen 25; 26 unterschiedliche Radien 29; 30 auf und greifen mit ihren Außenrändern 27; 28 ineinander. Im verbauten Zustand sind die ineinander greifenden Halbschalen 25; 26 des Lagergehäuses 6 in einen Lagerring 9 eingepasst. Das Lagergehäuse 6 nimmt den Kugelkopf 12 des Lagerzapfens 11 in sich auf. Der Kugelkopf 12 weist dabei in Längsrichtung 20 des Lagerzapfens 11 gesehen an seinem freien Ende eine Abflachung auf, wodurch eine Kugelkalotte gebildet wird und ist an seinem motorseitigen Ende über eine Einschnürung 32 mit dem freien Ende 21 des Lagerzapfens 11 verbunden. In Längsrichtung 20 des Lagerzapfens 11 1 sind beiderseits des Kugelkopfes 12 zwei metallene Kappen 7; 8 erkennbar. An den jeweiligen äußeren Seitenflächen der Kappen 7; 8 ist jeweils eine Gummibeschichtung 34 aufgebracht. Im verbauten Zustand und in Neutralposition 36 des Schalthebels 1 legt sich der Kugelkopf 12 mit seiner Abflachung 31 an die Innenseite 37 der Kappe 7 an. Im Bereich der Einschnürung 32 des Lagerzapfens 11 ist die Kappe 7 erkennbar. In Längsrichtung 20 des Lagerzapfens 11 gesehen sind die beiden Kappen 7; 8 zu beiden Seiten des Kugelkopfes 12 angeordnet und werden in verbautem Zustand 35 des Lagergehäuses 6 im Lagerauge 4 außenseitig jeweils durch einen Sicherungsring 13 verliersicher in der Einbaulage 14 gehalten. Die Sicherungsringe 13 greifen dabei in Nuten 38 ein, die im Bereich des Lagerauges 4 radial in den Schalthebel 4 eingebracht sind. In Fig. 1 weist die Kappe 8 einen umlaufenden Außenring 39 auf, der motorseitig im verbauten Zustand 35 an der Halbschale 26 anliegt und sich auf der vom Motor 23 abgewandten Seite am Sicherungsring 13 abstützt. Die Kappe 7 umfasst einen umlaufenden Außenring 39 sowie einen Ringvorsprung 16, der einen Durchbruch 41 zum Durchtritt des Lagerzapfens 11 mit seinem Kugelkopf 12 freigibt. An den umlaufenden Ringvorsprung 16 ist ein Faltenbalg 18 angeschlossen, der das freie Ende 21 des Lagerzapfens 11 in Richtung auf den Motor 23 hin teilweise umgibt. Der Faltenbalg 18 weist dabei eine umlaufende Lippe 43 auf, die in eine Nut 42 des Lagerzapfens 11 eingreift.

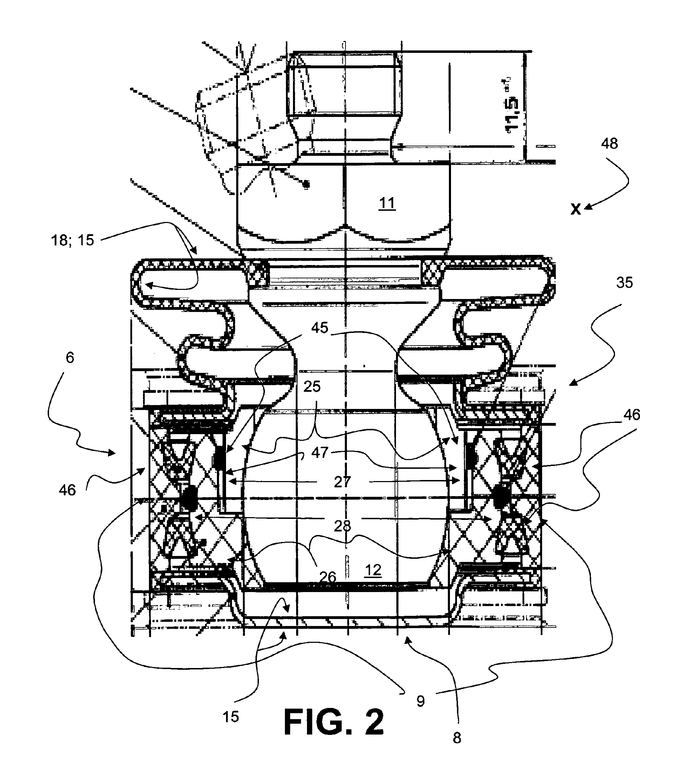

Fig. 2 zeigt entsprechend der vorhergehenden Fig. 1 seitlich geschnitten die erfindungsgemäße Lagerung für einen Schalthebel 1. Im Vergleich zur Fig. 1 sind das obere Ende 3 bzw. das fahrbahnseitig gegenüberliegende Ende des Schalthebels 1 nicht dargestellt. Das Lagergehäuse 6 der Fig. 2 weist gegenüber der entsprechenden Darstellung in Fig. 1 konstruktive Unterschiede auf. Zwischen die aneinander anliegenden Außenränder 27; 28 der Halbschale 25; 26 ist ein umlaufender Dichtungsring 45 eingepasst. Die äußere Halbschale 26 ist gegenüber dem umlaufenden Lagerring 9 durch einen umlaufenden Dichtungsring 45 und zwei jeweils U-förmige Dichtungsringe 46 radial abgegrenzt. Die Dichtungsringe 46 können auch in einer anderen Form ausgebildet sein. Vergleichbar mit der Fig. 1 nehmen die beiden Halbschalen 25; 26 im verbauten Zustand 35 den Kugelkopf 12 des Lagerzapfens 11 in sich auf. Innerhalb der Innenflächen 47 der mit ihren Öffnungen aneinander anliegenden Halbschalen 25; 26 ist der Kugelkopf 12 in Fahrtrichtung 48 und/oder quer zu dieser kippbar angeordnet ist.

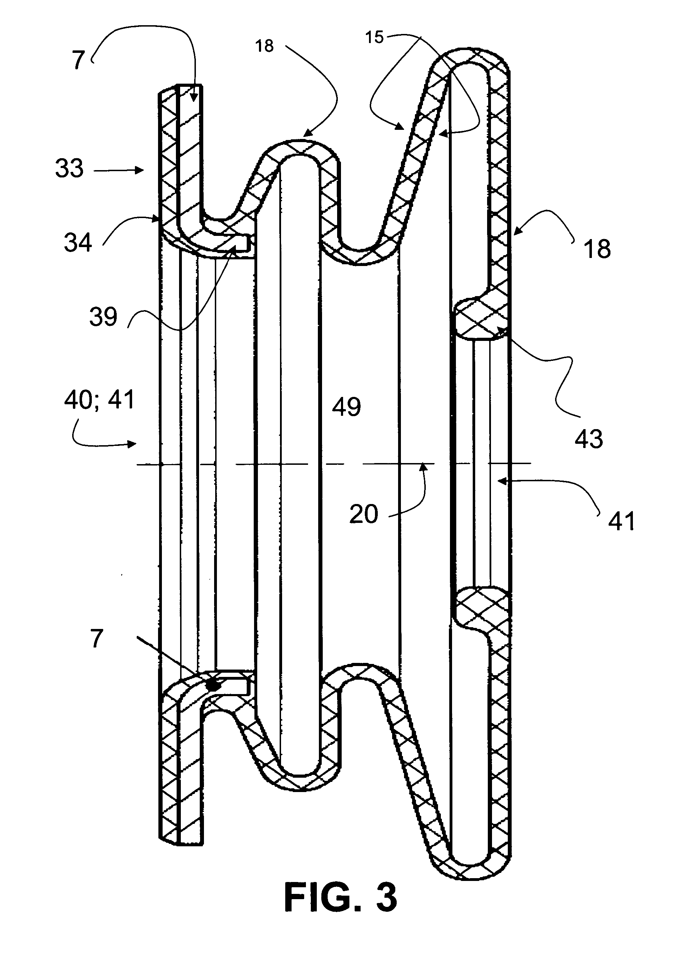

Fig. 3 zeigt den Faltenbalg 18 einer erfindungsgemäßen Lagerung des Schalthebels 1 (nicht gezeigt). Mit Bezugsziffer 7 ist die Kappe dargestellt, die einen Außenring 39 aufweist und eine Ausbuchtung 40, die einen Durchbruch 41 freigibt, durch den der Lagerzapfen 11 mit seinem Kugelkopf 12 bzw. der Kugelkalotte 10 einführbar ist. In Bezug zur Längsrichtung 20 des Lagerzapfens 11 ist an der Seitenfläche 33 der Kappe 7, die dem Kugelkopf 12 zugewandt ist eine Gummibeschichtung 34 aufgebracht. An dem von der Kappe 7 abgewandten Ende des Faltenbalgs 18 ist eine umlaufende Lippe 43 vorgesehen, die einen Durchbruch 41 bildet, der dem Durchtritt des Lagerzapfens 11 dient. Die umlaufende Lippe 43 des Faltenbalgs 18 greift in die umlaufende Nut 42 des Lagerzapfens 11 ein und schützt den Innenraum 49 des Faltenbalgs 18 sowie das angrenzende Lagergehäuse 6 vor eindringender Verschmutzung von außen.

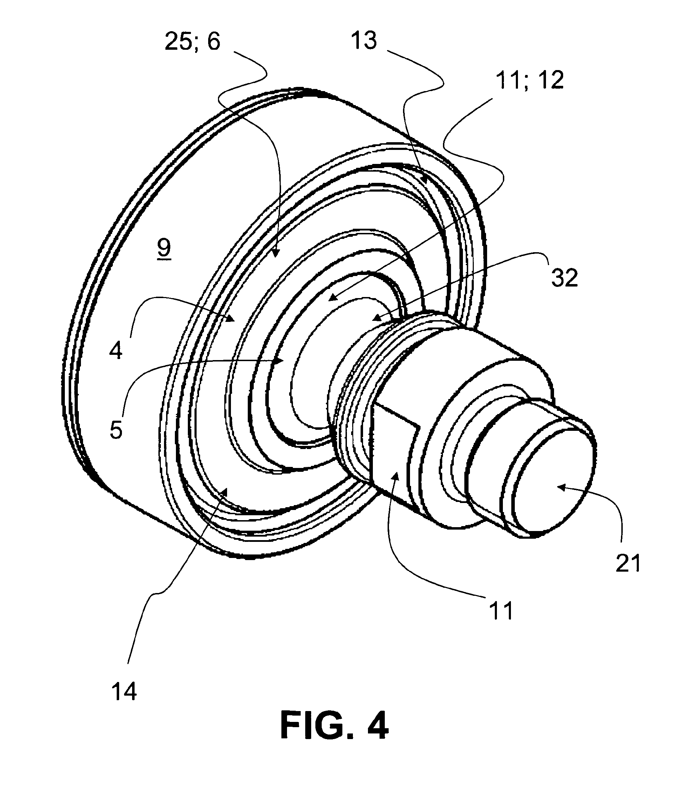

Fig. 4 zeigt in perspektivischer Darstellung den Lagerzapfen 11 mit seinem als Kugelkalotte ausgebildeten Kugelkopf 12, der in das Kugelgelenk 5 aufgenommen ist. Mit Ziffer 25 ist die Halbschale des Lagergehäuses 6 bezeichnet. Die Halbschale 25 ist durch den Sicherungsring 13 in Einbaulage 14 vor dem Herausfallen aus dem Lagerring 9 und aus dem Lagerauge 4 geschützt. Das freie Ende des Lagerzapfens 11 ist mit Bezugsziffer 21 bezeichnet und ist gegenüber dem Kugelkopf 12 durch eine Einschnürung 32 abgegrenzt. An dem von dem Kugelgelenk 5 abgewandten freien Ende 21 des Lagerzapfens 11 ist der Lagerzapfen 11 am Motor 23 (nicht gezeigt) befestigt.

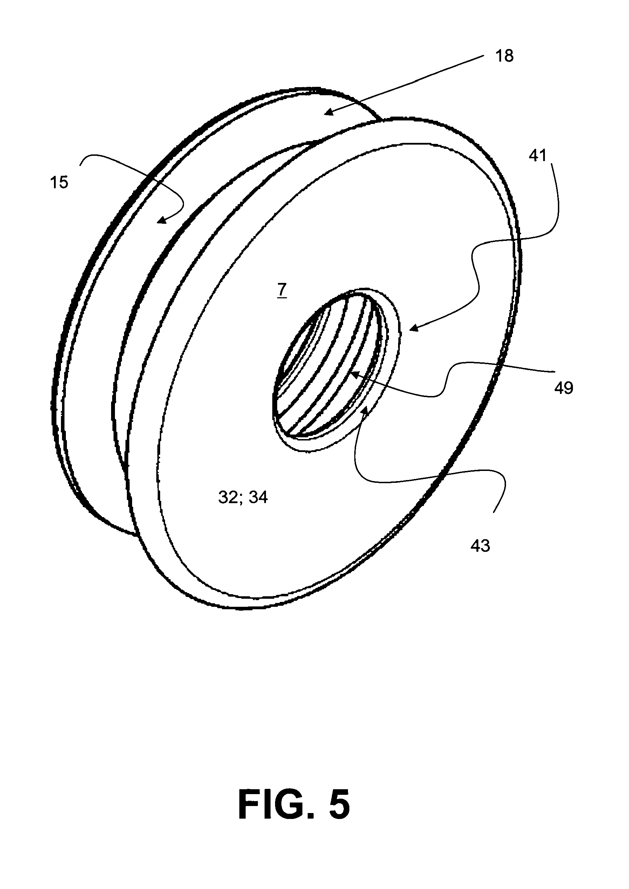

Die perspektivische Darstellung des Faltenbalgs 18 ist in der Fig. 5 dargestellt. Der Durchbruch 41 der Kappe 7 erlaubt den Durchtritt des Lagerzapfens 11 mit seinem Kugelkopf 12 durch den Faltenbalg 18. Im verbauten Zustand greift die Kappe 7 in das Lagergehäuse 6 ein und ist durch einen nicht dargestellten Sicherungsring 13 vor dem Herausfallen aus dem Kugelgelenk 5 (nicht dargestellt) gesichert. Die Kappe 7 ist an ihren beiden Seitenflächen 32 mit einer Gummibeschichtung 34 versehen. Das von der Kappe 7 abgewandte Ende des Faltenbalgs 18 mündet in eine umlaufende Lippe 43, die den durch den Faltenbalg 18 durchgeschobenen Lagerzapfen 11 (nicht dargestellt) umschließt, wobei die umlaufende Lippe 43 in die Nut 42 des Lagerzapfens 11 eingreift und den Innenraum 49 des Faltenbalgs 18 vor Einbringung von Verschmutzungen schützt.

In den Fig. 1-3 und 5 ist mit Bezugsziffer 15 verdeutlicht, dass der Faltenbalg 18 aus elastischem und nachgiebigem Werkstoff besteht. Die Bezugsziffer 15 bedeutet in den Fig. 1 und 2, dass die Kappe 8 an ihren Außenflächen mit einem elastischen und nachgiebigen Werkstoff überzogen ist.

### Bezugsziffernliste:

- 1: Schalthebel
- 2: unteres Ende des Schalthebels
- 3: oberes Ende des Schalthebels
- 4: Lagerauge
- 5: Kugelgelenk
- 6: Lagergehäuse
- 7; 8: Kappe
- 9: Lagerring
- 10: Kugelkalotte
- 11: Lagerzapfen
- 12: Kugelkopf
- 13: Sicherungsring
- 14: Einbaulage
- 15: Werkstoff
- 16: Ringvorsprung
- 17: axiales Ende des Faltenbalgs
- 18: Faltenbalg
- 19: Fahrerhausboden
- 20: Längsrichtung des Lagerzapfens
- 21: freies Ende des Lagerzapfens
- 22: gegenüberliegendes Ende des Lagerzapfens
- 23: Motor
- 24: inneres des Lagerauges
- 25; 26: Halbschale des Lagergehäuses
- 27; 28: Außenränder des Lagergehäuses
- 29; 30: Radien der Halbschalen
- 31: Abflachung des Kugelkopfes
- 32: Einschnürung des Lagerzapfens
- 33: Seitenflächen der Kappen
- 34: Gummibeschichtung
- 35: verbauter Zustand
- 36: Neutralposition des Schalthebels
- 37: Innenseite der Kappe
- 38: Nut des Lagerauges
- 39: Außenring der Kappe
- 40: Ausbuchtung der Kappe
- 41: Durchbruch der Kappe
- 42: Nut des Lagerzapfens
- 43: Lippe des Faltenbalgs
- 44:
- 45: Dichtungsring der Halbschale
- 46: U-förmiger Dichtungsring der Halbschale
- 47: Innenfläche der Halbschale
- 48: Fahrtrichtung
- 49: Innenraum des Faltenbalgs

## Patentansprüche

1. Lagerung für einen Schalthebel (1), insbesondere eines Nutzfahrzeugs, an dessen unterm Ende (2) ein Koppelglied angelenkt ist, das mit dem Schalteingang eines Gangwechselgetriebes verbunden ist, wobei der Schalthebel (1) ein Lagerauge (4) aufweist, in das ein Kugelgelenk (5) mit seinem Lagergehäuse (6) eingebaut ist, das aus einem beiderseits durch Kappen (7; 8) abgedeckten Lagerring (9) mit eingebauter Kugelkalotte (10) besteht, wobei ein motorseitig befestigter Lagerzapfen (11) mit seinem Kugelkopf (12) in der Kugelkalotte (10) aufgenommen und das Kugelgelenk (5) im Lagerauge (4) durch zwei die Kappen (7; 8) zwischen sich aufnehmenden Sicherungsringen in Einbaulage gehalten ist **dadurch gekennzeichnet, dass** jede der beiden Kappen beidseitig mit einem der Entklirrung dienenden nichtmetallischen elastischen nachgiebigen Werkstoff (15) überzogen ist.

2. Schalthebel nach Anspruch 1, **dadurch gekennzeichnet, dass** die eine an der Kugelkalotte (10) anliegende Kappe (7; 8) einen Ringvorsprung (16) aufweist, auf dem das eine axiale Ende (17) eines aus elastischem Werkstoff (15) bestehenden Faltenbalgs (18) angeschlossen ist, der den Lagerzapfen (11) mit einem Teil seiner Länge umschließt.
